# FASCICULE DE BREVET EUROPEEN

(11) **EP 0 726 417 B1**
(45) Date de publication et mention de la délivrance du brevet: **12.01.2000**
(21) Numéro de dépôt: 96400260.4
(22) Date de dépôt: 07.02.1996
(51) Int. Cl.: F16L 23/06

(54) **Dispositif de raccordement pour le raccordement rapide de deux canalisations**
Verbindungsvorrichtung zum Schnellverbinden von zwei Rohren
Coupling device for quick coupling of two pipes

(30) Priorité: 10.02.1995 FR 9501558
(43) Date de publication de la demande: 14.08.1996
(73) Titulaire: SERAP INDUSTRIES, 53120 Gorron (FR)
(72) Inventeur: Salin, Didier, F-53100 Mayenne (FR); Fortin, Jean Noel, F-61600 La Ferte Mace (FR)
(74) Mandataire: CABINET BONNET-THIRION

(56) Documents cités:
- CH-A- 390 637
- FR-A- 2 158 840
- FR-A- 2 697 893
- GB-A- 835 005
- US-A- 3 201 156

## Description

La présente invention concerne un dispositif de raccordement pour le raccordement rapide de canalisations. Ces canalisations comportent en général un raccord d'extrémité, appelé souvent ferrule, les ferrules des deux canalisations étant adaptées à coopérer à étanchéité par interposition d'un joint d'étanchéité serré par un moyen de serrage approprié agissant sur les ferrules elles-mêmes.

De tels dispositifs sont connus et décrits par exemple dans FR-A-2 158 840 ou FR-A-2 697 893 ; malheureusement, ces dispositifs connus présentent de nombreux inconvénients ; ils ont un encombrement axial ne permettant pas de les utiliser quelle que soit l'application, en particulier lorsqu'une canalisation est fixe et solidaire d'un réservoir par exemple.

Pour pallier ces inconvénients, on a proposé, par exemple dans US-A-3 201 156, un dispositif de raccordement, pour le raccordement rapide de canalisations, comportant une ferrule dite fixe et une ferrule dite mobile reliées respectivement aux extrémités des deux canalisations à raccorder, les extrémités libres des deux ferrules étant adaptées à coopérer à étanchéité par interposition d'un joint d'étanchéité et présentant des collerettes adaptées à coopérer, pour le serrage dudit joint, avec des gorges semi-cylindriques creusées dans deux demi-colliers articulés à une de leurs extrémités autour d'un axe, les autres extrémités desdits demi-colliers étant reliées par un système de serrage constitué d'un système articulé du type à genouillère.

Un tel dispositif n'est pas manipulable facilement et/ou rapidement.

La présente invention a pour objet premier un dispositif de raccordement de constitution simple permettant d'effectuer simplement les opérations de connexion et déconnexion ; pour ce faire, les demi-colliers et le système de serrage articulé associé sont portés par la ferrule fixe, à la manière du dispositif de raccordement selon le document FR-A-2 697 893.

La présente invention a pour objet second un dispositif de raccordement du genre ci-dessus dans lequel, en outre, des dispositions sont prises pour éviter que le joint d'étanchéité ne soit blessé lors de ces multiples opérations de connexion et déconnexion.

Ainsi, selon l'invention, un dispositif de raccordement, pour le raccordement rapide de canalisations, comportant deux demi-colliers articulés à une de leurs extrémités autour d'un axe, les autres extrémités desdits demi-colliers étant reliées par un système de serrage constitué d'un système articulé du type à genouillère et une ferrule dite fixe et une ferrule dite mobile reliées respectivement aux extrémités des deux canalisations à raccorder, les extrémités libres des deux ferrules coopérant à étanchéité par interposition d'un joint d'étanchéité et présentant des collerettes qui coopèrent, pour le serrage dudit joint, avec des gorges semi-cylindriques creusées dans les deux demi-colliers, les demi-colliers et le système de serrage articulé associé étant portés par la ferrule fixe qui porte également le joint d'étanchéité, la course en éloignement du demi-collier qui s'éloigne de l'axe de la ferrule fixe par gravité étant limitée par une butée, et, dans la position en butée dudit demi-collier, lorsque la collerette de la ferrule mobile est en fond de gorge dudit demi-collier, le point de l'alésage central de la ferrule le plus proche du fond de gorge étant au droit de la face de travail du joint.

Avantageusement, le système articulé du type à genouillère comprend un levier de serrage porté par une noix articulée, d'une part, sur ladite extrémité d'un demi-collier et, d'autre part, sur un bras de levier monté lui-même à articulation à l'extrémité de l'autre demi-collier ; de préférence, le bras de levier est articulé, à l'extrémité de l'autre demi-collier, autour d'un axe dont la position par rapport au demi-collier est réglable.

Avantageusement l'axe ou les axes d'articulation sont parallèles à l'axe de la ferrule fixe.

Selon une forme de réalisation l'axe autour duquel sont articulés chacun des deux demi-colliers est porté par une patte de fixation solidaire de la ferrule fixe ; selon une forme de réalisation, ledit axe est commun aux deux demi-colliers ; en variante, chacun des deux demi-colliers est articulé autour d'un axe qui lui est propre.

En variante, un pion solidaire de la ferrule fixe traverse une ouverture oblongue d'un demi-collier, une tête en bout du pion maintenant les demi-colliers et le système de serrage articulé associé lorsque le dispositif est non serré.

Avantageusement, le dispositif est positionné en sorte que, lorsqu'il est non serré, un demi-collier s'éloigne par gravité de l'axe de la ferrule fixe, tandis que l'autre demi-collier s'en rapproche, également par gravité.

Avantageusement, la face de travail du joint est plane ; la face de travail du joint est semi-torique ; le joint comporte un talon cylindrique annulaire ; le joint a une section en forme générale de L.

De préférence,la zone la plus basse du demi-collier placé en position inférieure comporte un trou d'égouttage à l'aplomb de la face d'extrémité du joint d'étanchéité.

Avantageusement, la ferrule fixe comprend une jupe cylindrique portant une collerette de raccordement ayant une face transversale où débouche une gorge annulaire limitée du côté de l'axe par une paroi en prolongement de la jupe dont la longueur axiale est inférieure à la profondeur axiale de la gorge en sorte que sa face transversale d'extrémité est axialement en retrait par rapport à la face plane transversale, le joint annulaire comprenant une partie de section rectangulaire prolongée du talon dont le diamètre extérieur est égal à celui de ladite partie lui-même égal au grand diamètre de la gorge, le diamètre intérieur du talon étant égal au petit diamètre de la gorge, tandis que le diamètre intérieur de ladite partie est égal au diamètre intérieur de la jupe.

De préférence, la ferrule mobile comprend une jupe cylindrique dont une extrémité porte une collerette de raccordement présentant une face tronconique externe raccordée à la surface extérieure de la jupe et prolongée par une face tronconique raccordée à une face plane transversale d'extrémité, les faces tronconiques étant inclinées de façons opposées, en sorte que, lorsque le dispositif est en position ouverte de repos, la présentation en poussant de la ferrule mobile provoque un écartement des demi-colliers permettant le franchissement du diamètre maximum de la ferrule mobile ; la profondeur des gorges semi-cylindriques creusées dans les deux demi-colliers, d'une part, et les hauteurs des faces tronconiques des ferrules, d'autre part, permettent un maintien de la ferrule mobile lorsque le système de serrage n'est pas encore en position de serrage.

Les caractéristiques et avantages de l'invention ressortiront d'ailleurs de la description qui va suivre à titre d'exemple en référence aux dessins annexés dans lesquels ;
- la figure 1 est une vue de dessus, partielle, schématique montrant une application du dispositif selon l'invention ;
- la figure 2 est une vue en plan, à plus grande échelle, du dispositif montré figure 1, sans la ferrule mobile pour plus de clarté ;
- la figure 3 est une vue en coupe selon III-III de la figure 2, le dispositif étant en cours d'ouverture, la ferrule mobile étant présente ;
- la figure 4 est analogue à la figure 3, le dispositif étant fermé ;
- la figure 5 est une vue partielle, à grande échelle, de l'extrémité de la ferrule fixe, et du joint;
- la figure 6 est une vue partielle, à grande échelle, de l'extrémité de la ferrule mobile ;
- la figure 7 est une vue analogue à la figure 2 mais à échelle différente et en perspective ;
- la figure 8 est analogue à la figure 2, le dispositif étant fermé ;
- la figure 9 est analogue à la figure 2, le dispositif étant en position de nettoyage ;
- la figure 10 est une vue de côté d'un bouchon ;
- la figure 11 est analogue à la figure 8 mais concerne une variante de dispositif ;
- la figure 12 est une coupe selon XII-XII de la figure 11.

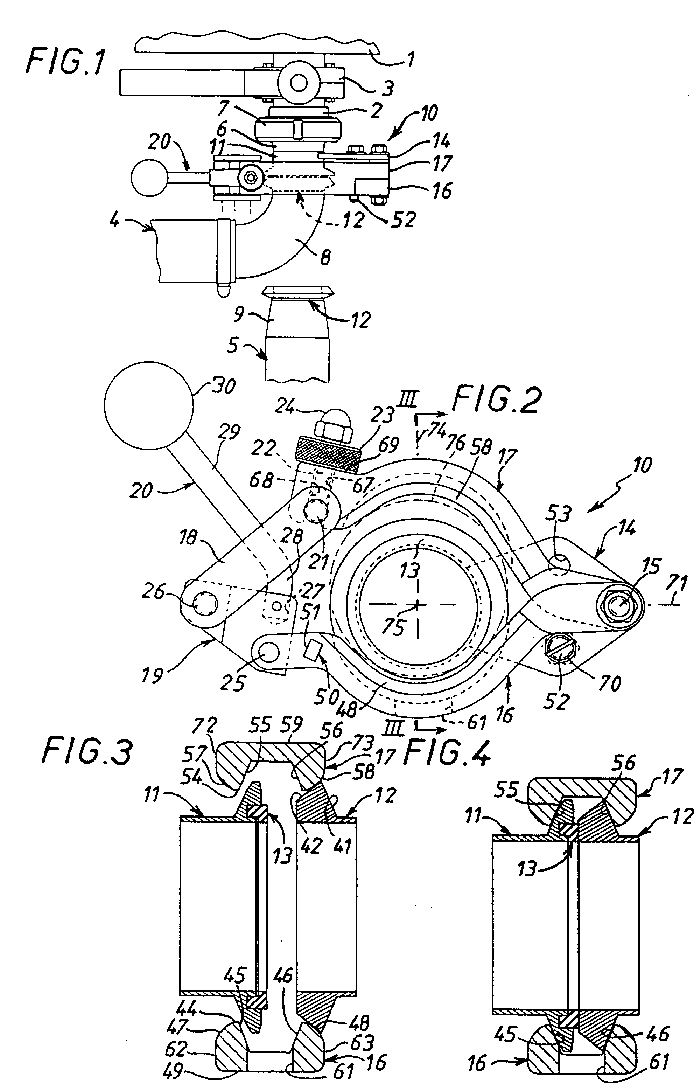

Le dispositif de raccordement 10, selon l'invention, est destiné au raccordement de deux canalisations ; c'est le cas, par exemple, des canalisations associées à un réservoir à lait dans lequel les fermiers stockent leur lait qui est ensuite repris par des transporteurs dans des camions citernes; ainsi, comme cela est connu et illustré schématiquement par la figure 1, un réservoir 1 utilisé pour le refroidissement du lait comporte dans sa partie basse une canalisation de sortie 2 munie d'une vanne 3 dont l'ouverture et la fermeture sont obtenues par le déplacement d'un levier de commande déplacé en général dans un plan horizontal ; sur la canalisation de sortie 2, dont l'extrémité est munie d'un filetage externe, est monté par vissage un embout de sortie constitué d'une bague 6 associée à un écrou de serrage 7 et solidarisée, par exemple par soudage, à une ferrule dite fixe 11 destinée à coopérer à étanchéité avec une ferrule dite mobile 12 ; les ferrules fixe 11 et mobile 12 font partie du dispositif de raccordement 10 et seront décrites plus en détail ci-dessous.

La ferrule mobile 12 est solidaire d'un tronçon de canalisation coudé 8 lui-même raccordé à un tuyau 4, généralement souple, d'une machine à laver, pour le lavage du réservoir 1, portée par le réservoir ; sur la figure 1, on voit que les canalisations décrites ci-dessus sont dans l'état où elles sont raccordées pour l'opération de lavage du réservoir, la vanne 3 étant alors ouverte, ou dans l'état où, la vanne 3 étant fermée, le fermier remplit le réservoir 1 du lait de ses traites.

Lorsque le transporteur vient récupérer le lait contenu dans le réservoir 1, il débranche, grâce au dispositif 10, le tuyau souple 4 et son tronçon coudé 8 qu'il remplace par une canalisation de vidage 5 dont une extrémité est munie d'un manchon 9 raccordé à une ferrule mobile 12, identique à la précédente, et dont l'autre extrémité est reliée à la citerne du camion citerne par l'intermédiaire de moyens de pompage.

On conçoit que, notamment dans cette application, il est important que l'encombrement axial du dispositif 10 soit limité compte tenu de l'implantation du tuyau de lavage 4 par rapport à la paroi frontale du réservoir 1 ; de plus, le dispositif 10 doit être d'un fonctionnement simple et quasi automatique ne nécessitant pas en particulier pour le montage de la canalisation de vidage 5, souvent longue et lourde, l'utilisation des deux mains du transporteur ; en outre, la constitution du dispositif 10 doit être compatible avec les règles d'hygiène applicables en matière de denrées alimentaires.

Le dispositif de raccordement 10 selon l'invention comporte essentiellement deux demi-colliers 16, 17 ; chaque demi-collier 16, 17 comprend une partie médiane en forme d'arc de cercle dont la section est adaptée à coopérer avec les ferrules fixe 11 et mobile 12 ci-dessus pour le raccordement de celles-ci.

Plus précisément, la section de la partie médiane du demi-collier 16 présente, comme cela est mieux visible sur la figure 3, deux faces semi-cylindriques, cylindriques, une interne 44 et une externe 49 ; du côté de la face interne 44 du demi-collier 16 est creusée une gorge semi-cylindrique annulaire limitée par deux faces semi-tronconiques internes 45, 46 faisant entre elles un angle ouvert vers l'extérieur ; le demi-collier 16 est limité transversalement par deux faces planes transversales 62, 63 qui se raccordent à la face interne semi-cylindrique 44 selon des congés semi-cylindriques, respectivement 47 et 48, de forme torique, comme représenté, ou de toute autre forme progressive telle que tronconique ou comprise entre celles-ci.

La section de la partie médiane du demi-collier 17 est identique à celle qui vient d'être décrite à propos du demi-collier 16 comme le montre la figure 3 sur laquelle les références des parties du demi-collier 17 identiques à celles correspondantes du demi-collier 16 sont obtenus en rajoutant dix à celles du demi-collier 16.

Les parties médianes des deux demi-colliers 16 et 17 sont symétriques par rapport au plan médian transversal, pour des raisons expliquées ci-dessous.

Les deux demi-colliers 16 et 17 sont adaptés à coopérer, notamment par leurs parties médianes, avec les ferrules fixe 11 et mobile 12.

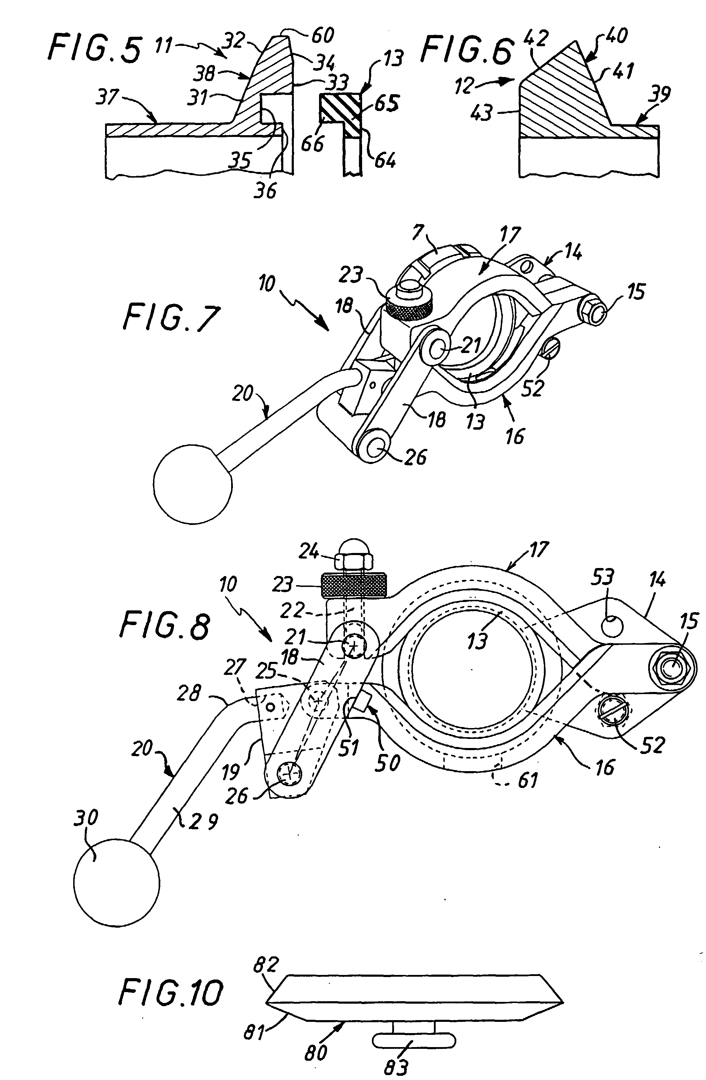

La ferrule fixe 11, mieux visible sur la figure 5, comprend une jupe cylindrique 37 dont une extrémité est solidarisable par exemple par soudage à l'une des canalisations à raccorder ; l'autre extrémité de la jupe 37 porte une collerette de raccordement 38 présentant une première face tronconique externe 31, raccordée à la surface extérieure de la jupe 37 et prolongée par une seconde face tronconique externe 32 plus inclinée sur l'axe de la jupe 37 que ne l'est la première face 31 ; la collerette 38 est radialement comprise entre la surface extérieure de la jupe 37 et une paroi cylindrique externe 60 qui limite, d'un côté, la seconde face tronconique externe 32 et, de l'autre côté, une face tronconique 34 reliant ladite paroi cylindrique externe 60 à une face transversale 33 où débouche une gorge annulaire cylindrique 35 à section rectangulaire limitée du côté de l'axe de la ferrule 11 par une paroi en prolongement de la jupe 37 dont la longueur axiale est inférieure à la profondeur axiale de la gorge 35 en sorte que sa face transversale d'extrémité 36 est axialement en retrait par rapport à la face plane transversale 33 de la ferrule fixe 11.

La ferrule mobile 12, mieux visible sur la figure 6, comprend une jupe cylindrique 39 dont une extrémité est solidarisable par exemple par soudage à l'autre des canalisations à raccorder ; l'autre extrémité de la jupe 39 porte une collerette de raccordement 40 présentant une face tronconique externe 41, raccordée à la surface extérieure de la jupe 39 et prolongée par une face tronconique 42 raccordée à une face plane transversale d'extrémité 43, les faces tronconiques 41 et 42 étant inclinées de façons opposées.

La face plane transversale 43 de la ferrule mobile 12 est destinée à coopérer en étanchéité avec la face frontale de travail 64 d'un joint d'étanchéité 13, voir figure 5 ; le joint 13 annulaire, de forme générale en L, comprend une partie de section rectangulaire 65 munie, d'un côté, de la face frontale de travail 64 et prolongée, de l'autre côté, d'un talon annulaire 66, de section également rectangulaire, dont le diamètre extérieur est égal à celui de la partie 65, lui-même égal au grand diamètre de la gorge 35 de la ferrule 11 adaptée à recevoir ledit joint 13, le diamètre intérieur du talon 66 étant égal au petit diamètre de la gorge 35 ; le petit diamètre de la partie 65 du joint est égal au diamètre intérieur de la jupe 37 en sorte que le joint 13 s'appuie, d'une part, sur le fond de la gorge 35 et, d'autre part, sur la face d'extrémité transversale 36 de la ferrule 11.

Sur la figure 5, la face frontale de travail 64 du joint 13 est plane ; bien entendu, ladite face 64 pourrait être d'une forme autre comme par exemple du genre semi-sphérique.

L'étanchéité du raccordement est obtenue par serrage, l'une vers l'autre, des ferrules fixe 11 et mobile 12.

Pour ce faire, comme cela est visible sur la figure 2, les deux demi-colliers 16, 17 sont articulés à l'une de leurs extrémités autour d'un axe commun 15, leurs autres extrémités étant reliées par un système de serrage articulé du type à genouillère ; ledit système comprend un levier de serrage 20 porté par une noix 19 articulée, d'une part, sur l'autre extrémité du demi-collier 16 autour d'un axe 25 et, d'autre part, autour d'un axe 26 sur une extrémité d'un bras de levier 18 dont l'autre extrémité est montée pivotante autour d'un axe 21 porté par l'autre extrémité du demi-collier 17; les longueurs et positions relatives des éléments ci-dessus sont telles que le levier 20 puisse être utilisé comme levier à genouillère. Pour des raisons qui seront expliquées ci-dessous, le levier 20 comprend une tige 29 munie à une extrémité d'une boule de préhension 30, l'autre extrémité 28 étant coudée et reçue dans un logement borgne 27 de la noix 19 ; une butée 50 portée par le demi-collier 16 au voisinage de l'axe 25 présente une face de butée 51 destinée à venir au contact de la tranche du bras de levier 18 dans la position de serrage du dispositif.

Avantageusement, la position de l'axe 21 par rapport au demi-collier 17 est réglable ; à cet effet, l'axe 21 est porté par une tige filetée 22 traversant un alésage 67 prévu à l'extrémité correspondante du demi-collier 17 ; l'alésage 67 débouche du côté intérieur au droit d'une échancrure 68 en forme de chape dans laquelle l'axe 21 est disposé transversalement et peut se déplacer le long des bords de l'échancrure ; du côté extérieur, l'alésage 67 débouche au droit d'une face d'appui 69 avec laquelle est amené à coopérer un écrou de réglage 23, avantageusement moleté, engagé par vissage sur la tige filetée 22 ; en bout de tige filetée, un écrou borgne 24 permet d'éviter un dévissage complet de l'écrou de réglage 23.

Les différents axes d'articulation 15, 21, 25, 26 sont parallèles entre eux et, lorsque le dispositif de raccordement est installé pour le raccordement de deux canalisations, lesdits axes sont parallèles à l'axe des tronçons de raccordement desdites canalisations : cette disposition avantageuse confère au dispositif de raccordement un faible encombrement axial, ce qui est le but recherché par la présente invention.

Selon la variante des figures 1 à 10, le dispositif de raccordement 10 est porté par la ferrule dite fixe 11 ; à cet effet, une patte de fixation 14, visible notamment sur les figures 1 et 2, est solidarisée par exemple par soudage à la surface extérieure de la ferrule 11 en s'étendant transversalement par rapport à l'axe de celle-ci ; c'est la plaque de fixation 14 qui porte l'axe 15 autour duquel sont articulés les demi-colliers 16 et 17, l'axe 15 étant perpendiculaire à ladite plaque 14 ; l'axe 15 est par exemple une tige filetée traversant des trous ménagés à l'extrémité des deux demi-colliers 16 et 17, des rondelles et écrous étant prévus aux extrémités de ladite tige.

Selon une variante non représentée, la plaque 14 porte deux axes tels que l'axe 15, chaque demi-collier 16 et 17 étant articulé autour d'un tel axe qui lui est propre ; une telle disposition peut permettre notamment de réaliser les deux demi-colliers de manière identique, ce qui peut être avantageux sur le plan du prix de revient.

La patte de fixation 14 est munie d'un logement 70 permettant d'y fixer une butée 52 sur laquelle s'appuie par gravité le demi-collier 16 dans la position ouverte du dispositif 10 montrée sur la figure 2 ; sur cette figure, le dispositif 10 est placé en sorte que l'axe 15 d'articulation des demi-colliers 16 et 17 est dans le, ou au voisinage du, plan diamétral horizontal 71 passant par l'axe longitudinal 75 de la ferrule fixe 11, la butée 52 étant située en dessous de ce plan 71 et plus proche de l'axe longitudinal 75 que ne l'est l'axe 15 d'articulation, compte-tenu de l'angle que fait l'extrémité de fixation du demi-collier 16 avec sa partie médiane en forme d'arc de cercle. Les forces de gravité sont mises à profit pour pré-montage avec maintien de la ferrule mobile 12 dans les demi-colliers 16 et 17 ; plus précisément, dans la position de repos, ouverte, du dispositif 10, l'ensemble constitué par le bras de levier 18, la noix 19 et le levier 20 est en appui sur l'axe 25 et suspendu au demi-collier 17 par l'intermédiaire de l'axe 21 grâce à la coopération de l'écrou de réglage 23 avec la face d'appui 69 du demi-collier 17, lui-même en appui sur la ferrule fixe 11; la présentation, en poussant, de la ferrule mobile 12 provoque un écartement des demi-colliers 16 et 17, comme le montre la figure 3, grâce à la face frontale tronconique 42 de la ferrule mobile 12 ; cet écartement se poursuit jusqu'au franchissement du diamètre maximum de la ferrule mobile 12, position représentée sur la figure 2 sur laquelle le trait mixte 76 illustre ce diamètre maximum.

Après que cette zone de plus grand diamètre de la ferrule mobile 12 ait franchi les congés 48 et 58, la partie inférieure de la ferrule mobile 12 tombe à l'intérieur du demi-collier inférieur 16 tandis que le demi-collier supérieur 17 retombe en coiffant l'extrémité supérieure de la ferrule mobile 12, la face semi-tronconique interne 56 du demi-collier supérieur 17 venant retenir la face tronconique externe 41 de la ferrule 12 dans sa partie supérieure ; les profondeurs des gorges internes des demi-colliers 16 et 17, d'une part, et les hauteurs des faces semi-tronconiques des ferrules 11 et 12, d'autre part, permettent un maintien de la ferrule mobile 12, et donc de la canalisation associée, bien que le joint 13 n'ait pas encore été serré ; comme on l'aura remarqué, aucune intervention autre que la présentation et la poussée de la ferrule mobile, pouvant être d'ailleurs faites d'une seule main, n'est nécessaire, ceci ayant été rendu possible grâce aux forces de gravité intervenant sur les autres pièces du dispositif 10.

Pour le serrage du joint 13, il suffit de rabattre vers le bas, dans le sens anti-horaire, le levier 20 ; au cours de cette opération, les demi-colliers 16 et 17 se rapprochent l'un de l'autre en rapprochant la ferrule mobile 12 de la ferrule fixe 11, la ferrule mobile 12 étant par ailleurs soulevée par le demi-collier 16 qui s'éloigne de sa butée 52 ; on appréciera que pendant son mouvement ascendant, même si elle est au contact du joint 13, la ferrule mobile 12 ne risque pas de blesser le joint 13 grâce aux faces planes, 64 du joint et 43 de la ferrule, qui sont en regard ; ceci est également vrai si la face du joint est semi-torique, comme dit ci-dessus ; pour être sûr que ceci soit obtenu, on s'arrange pour que, à l'instant initial, lorsque la ferrule 12 est tombée dans la gorge du demi-collier inférieur 16 alors en butée par gravité sur la butée 52, le point le plus bas de l'alésage central de la ferrule 12 soit au droit de la face 64 du joint 13.

Ce mouvement du levier 20 conduit au centrage coaxial des ferrules 11 et 12. En poursuivant la rotation du levier 20, le joint 13 est comprimé pour assurer l'étanchéité de l'assemblage ; cette compression est maintenue par venue en butée du bras de levier 18 sur la butée 50 portée par le demi-collier 16, le centre de l'axe 26 ayant franchi légèrement la ligne des centres des axes 21 et 25 : c'est la position montrée sur la figure 8, la figure 4 montrant la coopération à étanchéité des ferrules 11 et 12.

La position de fermeture du dispositif 10 est assurée, grâce à l'invention, quel que soit le degré d'usure du joint 13 ; en effet, au fur et à mesure que le joint 13 s'use les ferrules 11 et 12 se rapprochent l'une de l'autre, pour compenser ladite usure, sous l'effet des demi-colliers 16 et 17 qui se rapprochent l'un de l'autre ; pour conserver l'efficacité du verrouillage à genouillère, il est dès lors nécessaire de conserver un écart constant entre les axes 21 et 25 ; ainsi, grâce à l'invention, ceci est obtenu en remontant l'axe 21 dans l'échancrure 68 du demi-collier 17 par vissage de l'écrou de réglage 23 au fur-et-à-mesure que le joint 13 s'use.

Dans l'exemple de dispositif qui vient d'être décrit, l'axe 15 d'articulation des demi-colliers 16 et 17 est à droite de l'axe 75, par rapport à la figure 2, le levier 20 se trouvant à gauche ; pour des raisons d'implantation, il peut être dans certains cas nécessaire que ce soit l'inverse, c'est-à-dire que le levier 20 soit à droite et l'axe 15 à gauche ; pour rendre possible cette réversibilité du dispositif, l'ensemble comprenant les demi-colliers 16 et 17, le bras de levier 18, la noix 19 est symétrique par rapport à un plan transversal, perpendiculaire à l'axe 75, et la patte de fixation 14 est symétrique par rapport au plan 71 contenant l'axe 75 et le centre de l'axe d'articulation 75, et présente en particulier un second logement 53 symétrique du logement 70, pour placer le dispositif avec le levier 20 à droite; il suffit de faire pivoter la ferrule 11 et donc la patte de fixation 14 de 180° autour de l'axe 75, de démonter l'axe 15, de retourner tout l'équipage comportant les demi-colliers 16 et 17 de 180° autour de l'axe vertical 74, de remonter l'axe 15, de sortir la butée 52 de son logement 70 et de la placer dans le logement 53.

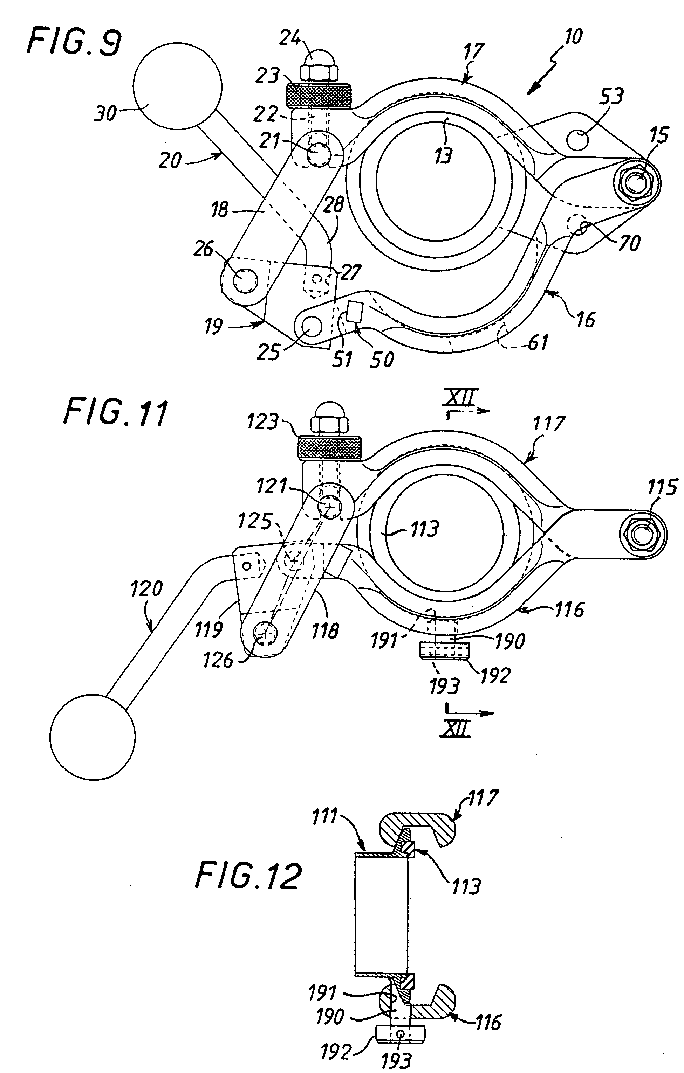

Lorsque le dispositif 10 est utilisé selon l'une ou l'autre des positions ci-dessus, il est avantageux de prévoir, dans la partie médiane du demi-collier inférieur 16, un trou d'égouttage 61, visible notamment sur les figures 2, 3, 4 et 8 à l'aplomb de la face d'extrémité 64 du joint 13 ; cette disposition permet d'éviter à des gouttes éventuelles de produit tombant de la ferrule fixe 11 après déconnexion des canalisations de souiller l'intérieur du demi-collier inférieur 16. Quoi qu'il en soit, le nettoyage de la partie intérieure du demi-collier supérieur 17 est aisé compte-tenu du grand débattement de celui-ci ; la démontabilité de la butée 52 rend aussi aisé le nettoyage de la partie intérieure du demi-collier inférieur 16, comme le montre la figure 9 où la butée 52 a été démontée.

Dans les exemples qui viennent d'être décrits, le dispositif a été placé dans des positions où l'axe d'articulation 15 était situé dans le plan horizontal 71 passant par l'axe 75, ou non loin dudit plan, pour mettre en oeuvre les forces de gravité ; on comprendra aisément que d'autres positions peuvent permettre d'obtenir le même résultat ; ces différentes positions doivent bien entendu tenir compte de la masse des pièces concernées, notamment des deux demi-colliers 16, 17 avantageusement massifs, en inox forgé par exemple ; comme on l'aura compris, ces positions doivent être telles que par gravité, dispositif non serré, le demi-collier 16 s'éloigne de l'axe 75 en direction de sa butée 52 tandis que le demi-collier se rapproche de l'axe 75.

Il est une position particulière qui correspond au cas où l'axe d'articulation 15 est dans le plan vertical 74 ou au voisinage de celui-ci ; dans ce cas, les deux demi-colliers 16, 17 sont rappelés par gravité vers l'axe 75, et la butée 52 n'est pas nécessaire ; cette variante simplifiée selon l'invention peut être utilisée lorsque l'implantation autorise le positionnement du levier 20 en partie basse au dessous de l'axe 75.

Il peut être nécessaire parfois, après déconnexion de la canalisation portant la ferrule mobile 12, de ne pas la remplacer par une autre telle que le tronçon 8 de la figure 1; c'est le cas notamment lorsque le réservoir 1 n'est pas associé à une machine à laver ; il est alors préférable de placer un bouchon 80, visible sur la figure 10, équipé d'une poignée 83 et muni de faces tronconiques 81, 82 identiques aux faces tronconiques de la ferrule mobile 12, respectivement 41, 42.

Les figures 11 et 12 montrent une variante de dispositif selon l'invention ; sur ces figures, les pièces identiques ou jouant le même rôle que celles des variantes précédentes portent des références obtenues en ajoutant cent aux références utilisées dans les variantes précédentes ; cette variante ne sera donc pas décrite en détail ; elle diffère des précédentes en ce que les demi-colliers 116 et 117 ne sont pas portés par la ferrule fixe 111 par l'intermédiaire de leur axe d'articulation mais par l'intermédiaire de l'un des deux demi-colliers, ici le demi-collier inférieur 116 par rapport aux figures ; la ferrule 111 porte extérieurement, par exemple par soudage, un pion 190 s'étendant radialement adapté à être reçu dans une ouverture oblongue 191 du demi-collier 116, ladite ouverture 191 s'étendant transversalement pour permettre un certain débattement en ouverture du demi-collier 116, débattement limité par une tête 192 maintenue par une goupille 193 en bout du pion 190 ; la tête 192 joue le rôle de la butée 52 décrite à propos des variantes précédentes ; ainsi, le fonctionnement de la variante des figures 11 et 12 est en tout point identique à celui déjà décrit à propos de ces variantes précédentes.

## Revendications

1. Dispositif de raccordement, pour le raccordement rapide de canalisations, comportant deux demi-colliers (16, 116 ; 17, 117) articulés à une de leurs extrémités autour d'un axe (15, 115), les autres extrémités desdits demi-colliers (16, 116; 17, 117) étant reliées par un système de serrage constitué d'un système articulé du type à genouillère et une ferrule dite fixe (11, 111) et une ferrule dite mobile (12) reliées respectivement aux extrémités des deux canalisations à raccorder, les extrémités libres des deux ferrules (11, 111 ; 12) coopérant à étanchéité par interposition d'un joint d'étanchéité (13, 113) et présentant des collerettes (38, 40) qui coopèrent, pour le serrage dudit joint, avec des gorges semi-cylindriques creusées dans les deux demi-colliers (16, 116, 17, 117), les demi-colliers (16, 116 ; 17, 117) et le système de serrage articulé associé étant portés par la ferrule fixe (11, 111) qui porte également le joint d'étanchéité (13,113), la course en éloignement du demi-collier (16, 116) qui s'éloigne de l'axe (75) de la ferrule fixe (11,111) par gravité étant limitée par une butée (52, 192), et, dans la position en butée dudit demi-collier (16, 116), lorsque la collerette (40) de la ferrule mobile (12) est en fond de gorge dudit demi-collier (16, 116), le point de l'alésage central de la ferrule le plus proche du fond de gorge étant au droit de la face de travail (64) du joint (13, 113).

2. Dispositif de raccordement selon la revendication 1, caractérisé par le fait que la face de travail (64) du joint (13, 113) est plane.

3. Dispositif de raccordement selon la revendication 1, caractérisé par le fait que la face de travail (64) du joint (13, 113) est semi-torique.

4. Dispositif de raccordement selon l'une des revendications 1 à 3, caractérisé par le fait que le système articulé du type à genouillère comprend un levier de serrage (20, 120) porté par une noix (19, 119) articulée, d'une part, sur ladite extrémité d'un demi-collier (16, 116) et, d'autre part, sur un bras de levier (18, 118) monté lui-même à articulation à l'extrémité de l'autre demi-collier (17, 117).

5. Dispositif de raccordement selon la revendication 4, caractérisé par le fait que le bras de levier (18, 118) est articulé, à l'extrémité de l'autre demi-collier (17, 117), autour d'un axe (21, 121) dont la position par rapport au demi-collier (17, 117) est réglable.

6. Dispositif de raccordement selon l'une des revendications 1 à 5, caractérisé par le fait que l'axe (15, 115) ou les axes (15, 115 ; 21, 121 ; 25, 125 ; 26, 126) sont parallèles à l'axe (75) de la ferrule fixe (11, 111).

7. Dispositif de raccordement selon l'une des revendications 1 à 6, caractérisé par le fait que l'axe (15) autour duquel sont articulés chacun des deux demi-colliers (16, 17) est porté par une patte de fixation (14) solidaire de la ferrule fixe (11).

8. Dispositif de raccordement selon la revendication 7, caractérisé par le fait que ledit axe (15) est un axe commun pour les deux demi-colliers (16, 17)

9. Dispositif de raccordement selon la revendication 7, caractérisé par le fait que chacun des deux demi-colliers (16, 17) est articulé autour d'un axe qui lui est propre.

10. Dispositif de raccordement selon l'une des revendications 1 à 6, caractérisé par le fait qu'un pion (190) solidaire de la ferrule fixe (111) traverse une ouverture oblongue (191) d'un demi-collier (116), une tête (192) en bout du pion (190) maintenant les demi-colliers (116, 117) et le système de serrage articulé associé lorsque le dispositif est non serré.

11. Dispositif de raccordement selon l'une des revendications 1 à 10, caractérisé par le fait que le dispositif est positionné en sorte que, lorsqu'il est non serré, un demi-collier (16, 116) s'éloigne par gravité de l'axe (75) de la ferrule fixe (11, 111), tandis que l'autre demi-collier (17, 117) s'en rapproche, également par gravité.

12. Dispositif de raccordement selon l'une des revendications 1 à 11, caractérisé par le fait que le joint (13, 113) comporte un talon cylindrique annulaire (66).

13. Dispositif de raccordement selon l'une des revendications 1 à 12, caractérisé par le fait que le joint (13, 113) a une section en forme générale de L.

14. Dispositif de raccordement selon l'une des revendications 1 à 13, caractérisé par le fait que la zone la plus basse du demi-collier (16) placé en position inférieure comporte un trou d'égouttage (61) à l'aplomb de la face d'extrémité (64) du joint (13, 113).

15. Dispositif de raccordement selon l'une des revendications 1 à 14, caractérisé par le fait que la ferrule fixe (11, 111) comprend une jupe cylindrique (37) portant une collerette de raccordement (38) ayant une face transversale (33) où débouche une gorge annulaire (35) limitée du côté de l'axe par une paroi en prolongement de la jupe (37) dont la longueur axiale est inférieure à la profondeur axiale de la gorge (35) en sorte que sa face transversale d'extrémité (36) est axialement en retrait par rapport à la face plane transversale (33), le joint annulaire (13) comprenant une partie de section rectangulaire (65) prolongée du talon (66) dont le diamètre extérieur est égal à celui de ladite partie (65) lui-même égal au grand diamètre de la gorge (35), le diamètre intérieur du talon (66) étant égal au petit diamètre de la gorge (35).

16. Dispositif de raccordement selon la revendication 15, caractérisé par le fait que le diamètre intérieur de ladite partie (65) est égal au diamètre intérieur de la jupe (37).

17. Dispositif de raccordement selon l'une des revendications 1 à 16, caractérisé par le fait que la ferrule mobile (12) comprend une jupe cylindrique (39) dont une extrémité porte une collerette de raccordement (40) présentant une face tronconique externe (41) raccordée à la surface extérieure de la jupe (39).

18. Dispositif de raccordement selon la revendication 17, caractérisé par le fait que la face tronconique externe (41) est prolongée par une face tronconique (42) raccordée à une face plane transversale d'extrémité (43), les faces tronconiques (41, 42) étant inclinées de facons opposées, en sorte que, lorsque le dispositif est en position ouverte de repos, la présentation en poussant de la ferrule mobile (12) provoque un écartement des demi-colliers (16, 116 ; 17, 117) permettant le franchissement du diamètre maximum de la ferrule mobile (12).

19. Dispositif de raccordement selon la revendication 18, caractérisé par le fait que la profondeur des gorges semi-cylindriques creusées dans les deux demi-colliers (16, 116 ; 17, 117), d'une part, et les hauteurs des faces tronconiques des ferrules (11, 111 ; 12), d'autre part, permettent un maintien de la ferrule mobile (12) lorsque le système de serrage n'est pas encore en position de serrage.

## Patentansprüche

1. Verbindungsvorrichtung zum Schnellverbinden von Leitungen, bestehend aus zwei Schellenhälften (16, 116; 17, 117), die an einem ihrer Enden an einer Achse (15, 115) angelenkt sind, wobei die anderen Enden dieser Schellenhälften (16, 116; 17, 117) durch ein aus einem Kniegelenksystem bestehendes Spannsystem verbunden sind, und aus einem sogenannten feststehenden Anschluß (11, 111) und einem sogenannten beweglichen Anschluß (12), die mit den Enden der beiden zu verbindenden Leitungen verbunden sind, wobei die beiden freien Enden der beiden Anschlüsse (11, 111; 12) durch Dazwischensetzen eines Dichtrings (13, 113) dicht zusammenwirken und Flansche (38, 40) aufweisen, die zum Einspannen des Dichtrings mit halbzylindrischen Nuten zusammenwirken, die in den beiden Schellenhälften (16, 116; 17, 117) vorgesehen sind, wobei die Schellenhälften (16, 116; 17, 117) und das zugeordnete Spann-Gelenksystem von dem feststehenden Anschluß (11, 111) getragen sind, der auch den Dichtring (13, 113) trägt, wobei der Entfernungshub der Schellenhälfte (16, 116), die sich von der Achse (75) des feststehenden Anschlusses (11, 111) durch Schwerkraft entfernt, durch einen Anschlag (52, 192) begrenzt ist und in der Anschlagsstellung dieser Schellenhälfte (16, 116), wenn der Flansch (40) des beweglichen Anschlusses (12) sich auf dem Nutboden dieser Schellenhälfte (16, 116) befindet, der dem Nutboden am nächsten gelegene Punkt der zentralen Bohrung des Anschlusses auf Höhe der Arbeitsfläche (64) des Dichtrings (13, 113) ist.

2. Verbindungsvorrichtung nach Anspruch 1, dadurch gekennzeichnet, daß die Arbeitsfläche (64) des Dichtrings (13, 113) eben ist.

3. Verbindungsvorrichtung nach Anspruch 1, dadurch gekennzeichnet, daß die Arbeitsfläche (64) des Dichtrings (13, 113) halbtorisch ist.

4. Verbindungsvorrichtung nach einem der Ansprüche 1 bis 3, dadurch gekennzeichnet, daß das Kniegelenksystem einen Spannhebel (20, 120) aufweist, der von einer Nuß (19, 119) getragen wird, die einerseits an diesem Ende einer Schellenhälfte (16, 116) und andererseits an einem Hebelarm (18, 118) angelenkt ist, der seinerseits am Ende der anderen Schellenhälfte (17, 117) angelenkt ist.

5. Verbindungsvorrichtung nach Anspruch 4, dadurch gekennzeichnet, daß der Hebelarm (18, 118) am Ende der anderen Schellenhälfte (17, 117) über eine Achse (21, 121) angelenkt ist, deren Stellung bezüglich der Schellenhälfte (17, 117) einstellbar ist.

6. Verbindungsvorrichtung nach einem der Ansprüche 1 bis 5, dadurch gekennzeichnet, daß die Achse (15, 115) oder die Achsen (15, 115; 21, 121; 25, 125; 26, 126) zur Achse (75) des feststehenden Anschlusses (11, 111) parallel sind.

7. Verbindungsvorrichtung nach einem der Ansprüche 1 bis 6, dadurch gekennzeichnet, daß die Achse (15), über die jede der Schellenhälften (16, 17) schwenkbar gelagert ist, von einem mit dem feststehenden Anschluß (11) fest verbundenen Lappen (14) getragen ist.

8. Verbindungsvorrichtung nach Anspruch 7, dadurch gekennzeichnet, daß diese Achse (15) eine beiden Schellenhälften (16, 17) gemeinsame Achse ist.

9. Verbindungsvorrichtung nach Anspruch 7, dadurch gekennzeichnet, daß jede der beiden Schellenhälften (16, 17) an einer ihr eigenen Achse angelenkt ist.

10. Verbindungsvorrichtung nach einem der Ansprüche 1 bis 6, dadurch gekennzeichnet, daß ein mit dem feststehenden Anschluß (111) fest verbundener Bolzen (190) eine langgestreckte Öffnung (191) einer Schellenhälfte (116) durchquert, wobei ein Kopf (192) am Ende des Bolzens (190) die beiden Schellenhälften (116, 117) und das zugeordnete Spann-Gelenksystem hält, wenn die Vorrichtung nicht gespannt ist.

11. Verbindungsvorrichtung nach einem der Ansprüche 1 bis 10, dadurch gekennzeichnet, daß die Vorrichtung so positioniert ist, daß, wenn sie nicht gespannt ist, eine Schellenhälfte (16, 116) sich durch Schwerkraft von der Achse (75) des feststehenden Anschlusses (11, 111) entfernt, während sich die andere Schellenhälfte (17, 117) dieser ebenfalls durch Schwerkraft nähert.

12. Verbindungsvorrichtung nach einem der Ansprüche 1 bis 11, dadurch gekennzeichnet, daß der Dichtring (13, 113) einen ringförmigen zylindrischen Bund (66) aufweist.

13. Verbindungsvorrichtung nach einem der Ansprüche 1 bis 12, dadurch gekennzeichnet, daß der Dichtring (13, 113) einen allgemein L-förmigen Querschnitt hat.

14. Verbindungsvorrichtung nach einem der Ansprüche 1 bis 13, dadurch gekennzeichnet, daß der unterste Bereich der in der unteren Stellung angeordneten Schellenhälfte (16) ein Abtropfloch (61) senkrecht unter der Stirnfläche (64) des Dichtrings (13, 113) aufweist.

15. Verbindungsvorrichtung nach einem der Ansprüche 1 bis 14, dadurch gekennzeichnet, daß der feststehende Anschluß (11, 111) eine zylindrische Buchse (37) aufweist, die einen Anschlußflansch (38) mit einer Querfläche (33) trägt, an der eine ringförmige Nut (35) ausmündet, die auf der Seite der Achse durch eine in der Verlängerung der Buchse (37) liegende Wand begrenzt ist, deren axiale Länge kleiner als die axiale Tiefe der Nut (35) ist, so daß ihre Stirnquerfläche (36) axial bezüglich der ebenen Querfläche (33) zurückversetzt ist, wobei der Dichtring (13) einen Teil (65) mit rechteckigem Querschnitt aufweist, der durch den Bund (66) verlängert ist, dessen Außendurchmesser gleich dem dieses Teils (65) ist, der seinerseits gleich dem großen Durchmesse der Nut (35) ist, wobei der Innendurchmesser des Bundes (66) gleich dem kleinen Durchmesser der Nut (35) ist.

16. Verbindungsvorrichtung nach Anspruch 15, dadurch gekennzeichnet, daß der Innendurchmesser dieses Teils (65) gleich dem Innendurchmesser der Buchse (37) ist.

17. Verbindungsvorrichtung nach einem der Ansprüche 1 bis 16, dadurch gekennzeichnet, daß der bewegliche Anschluß (12) eine zylindrische Buchse (39) aufweist, deren eines Ende einen Anschlußflansch (40) mit einer kegelstumpfförmigen Außenfläche (41) trägt, die an die Außenfläche der Buchse (39) anschließt.

18. Verbindungsvorrichtung nach Anspruch 17, dadurch gekennzeichnet, daß die kegelstumpfförmige Außenfläche (41) durch eine kegelstumpfförmige Fläche (42) verlängert wird, die an die ebene Stirnquerfläche (43) anschließt, wobei die kegelstumpfförmigen Flächen (41, 42) einander entgegengesetzt geneigt sind, so daß, wenn die Vorrichtung in offener Ruhestellung ist, das Andrücken des beweglichen Anschlusses (12) eine Spreizung der Schellenhälften (16, 116; 17, 117) bewirkt, die das Passieren des größten Durchmessers des beweglichen Anschlusses (12) gestattet.

19. Verbindungsvorrichtung nach Anspruch 18, dadurch gekennzeichnet, daß die Tiefe der in den beiden Schellenhälften (16, 116; 17, 117) vorgesehenen halbzylindrischen Nuten einerseits und die Höhen der kegelstumpfförmigen Seiten der Anschlüsse (11, 111; 12) andererseits einen Halt des beweglichen Anschlusses (12) gestatten, wenn das Spannsystem noch nicht in Spannstellung ist.

## Claims

1. A coupling device for rapid coupling of pipes, comprising two half-collars (16, 116; 17, 117) articulated at one of their ends about a pin (15, 115), the other ends of said half-collars (16, 116; 17, 117) being connected by a clamping system consisting of an articulated system of the articulated lever type, and a "stationary" ferrule (11, 111) and a "mobile" ferrule (12) connected respectively to the ends of two pipes to be coupled, the free ends of the two ferrules (11, 111; 12) interacting to achieve tightness through the interposition of a gasket (13, 113) and having flanges (38, 40) which interact, so as to clamp said gasket, with semi-cylindrical grooves recessed in the two half-collars (16, 116, 17, 117), the half-collars (16, 116; 17, 117) and the associated articulated clamping system being carried by the stationary ferrule (11, 11), which also carries the gasket (13, 113), the distance travelled by the half-collar (16, 116) as it moves away from the axis (75) of the stationary ferrule (11, 111) under the action of gravity being limited by an abutment (52, 192) and the point of the central bore in the ferrule which is closest to the bottom of the groove being opposite the working face (64) of the gasket (13, 113) when said half-collar (16, 116) is in the abutment position and the flange (40) of the mobile ferrule (12) is at the bottom of the groove in said half-collar (16, 116).

2. A coupling device according to claim 1, characterised in that the working face (64) of the gasket (13, 113) is flat.

3. A coupling device according to claim 1, characterised in that the working face (64) of the gasket (13, 113) is semi-toric in form.

4. A coupling device according to any one of claims 1 to 3, characterised in that the articulated system of the articulated lever type comprises a clamping lever (20, 120) carried by a yoke member (19, 119) articulated, on the one hand, to said end of a half-collar (16, 116) and, on the other hand, to a lever arm (18, 118) itself mounted articulatedly at the end of the other half-collar (17, 117).

5. A coupling device according to claim 4, characterised in that the lever arm (18, 118) is articulated, at the end of the other half-collar (17, 117), about a pin (21, 121), the position of which may be adjusted with respect to the half-collar (17, 117).

6. A coupling device according to any one of claims 1 to 5, characterised in that the pin (15, 115) or pins (15, 115; 21, 121; 25, 125; 26, 126) are parallel with the axis (75) of the fixed ferrule (11, 111).

7. A coupling device according to any one of claims 1 to 6, characterised in that the pin (15) about which there are articulated each of the two half-collars (16, 17) is carried by a fastening lug (14) integral with the stationary ferrule (11).

8. A coupling device according to claim 7, characterised in that said pin (15) constitutes a common axis for the two half-collars (16, 17).

9. A coupling device according to claim 7, characterised in that each of the two half-collars (16, 17) is articulated about an axis of its own.

10. A coupling device according to any one of claims 1 to 6, characterised in that a stud (190) integral with the stationary ferrule (111) passes through an oblong opening (191) in one half-collar (116), a head (192) at the end of the stud (190) holding the half-collars (116, 117) and the associated articulated clamping system when the device is not clamped.

11. A coupling device according to any one of claims 1 to 10, characterised in that the device is positioned in such a way that, when it is not clamped, one half-collar (16, 116) moves away from the axis (75) of the stationary ferrule (11, 11) through the action of gravity while the other half-collar (17, 117) moves closer thereto, also under the action of gravity.

12. A coupling device according to any one of claims 1 to 11, characterised in that the gasket (13, 113) comprises an annular cylindrical projection (66).

13. A coupling device according to any one of claims 1 to 12, characterised in that the gasket (13, 133) has a generally L-shaped cross section.

14. A coupling device according to any one of claims 1 to 13, characterised in that the lowest zone of the half-collar (16) located in the lower position comprises a drainage hole (61) plumb with the end face (64) of the gasket (13, 113).

15. A coupling device according to any one of claims 1 to 14, characterised in that the stationary ferrule (11, 111) comprises a cylindrical skirt (37) carrying a coupling flange (38) exhibiting a transverse face (33) in which there opens an annular groove (35) limited on the axis side by a wall extending the skirt (37), the axial length of which is less than the axial depth of the groove (35), in such a way that its transverse end face (36) is set back axially with respect to the flat transverse face (33), the annular gasket (13) comprising a portion (65) of rectangular cross section extended by the projection (66), the external diameter of which is equal to that of said portion (65), which is itself equal to the large diameter of the groove (35), the internal diameter of the projection (66) being equal to the small diameter of the groove (35).

16. A coupling device according to claim 15, characterised in that the internal diameter of said portion (65) is equal to the internal diameter of the skirt (37).

17. A coupling device according to any one of claims 1 to 16, characterised in that the mobile ferrule (12) comprises a cylindrical skirt (39), one end of which carries a coupling flange (40) having an outer truncated cone-shaped face (41) connected to the outer surface of the skirt (39).

18. A coupling device according to claim 17, characterised in that the outer truncated cone-shaped face (41) is extended by a truncated cone-shaped face (42) connected to a flat transverse end face (43), the truncated cone-shaped faces (41, 42) being inclined in opposite ways, in such a way that, when the device is an open rest position, pushing presentation of the mobile ferrule (12) causes separation of the half-collars (16, 116; 17, 117), permitting the maximum diameter of the mobile ferrule (12) to be negotiated.

19. A coupling device according to claim 18, characterised in that the depth of the semi-cylindrical grooves recessed into the two half-collars (16, 116; 17, 117), on the one hand, and the heights of the truncated cone-shaped faces of the ferrules (11, 111; 12), on the other hand, permit the mobile ferrule (12) to be held when the clamping system is not yet in the clamping position.
